# EUROPEAN PATENT SPECIFICATION

(11) **EP 4 131 590 B1**
(45) Date of publication and mention of the grant of the patent: **05.03.2025**
(21) Application number: 21777133.6
(22) Date of filing: 19.01.2021
(51) Int. Cl.: H01M 50/147, H01M 50/342, H01M 50/536

(54) **SQUARE-TYPE SECONDARY BATTERY AND METHOD FOR MANUFACTURING SAME**
QUADRATISCHE SEKUNDÄRBATTERIE UND VERFAHREN ZUR HERSTELLUNG DAVON
BATTERIE SECONDAIRE DE FORME CARRÉE ET SON PROCÉDÉ DE FABRICATION

(30) Priority: 27.03.2020 JP 2020058248
(43) Date of publication of application: 08.02.2023
(73) Proprietor: SANYO Electric Co., Ltd., Daito-shi Osaka 574-8534 (JP)
(72) Inventor: MAESONO, Hiroshi, Chuo-ku, Osaka-shi, Osaka 540-6207 (JP)
(74) Representative: Novagraaf International SA
(86) International application number: PCT/JP2021/001687
(87) International publication number: WO 2021/192544

(56) References cited:
- WO-A1-2013/021463
- WO-A1-2014/069575
- JP-A- 2007 179 793
- JP-A- 2007 179 793
- JP-A- 2010 282 851
- JP-A- 2012 221 943
- JP-A- 2013 055 038
- JP-A- 2014 182 949
- JP-A- 2018 125 110
- US-B2- 9 548 481

## Description

### TECHNICAL FIELD

The present disclosure relates to a rectangular secondary battery and the method for manufacturing the same.

### BACKGROUND ART

A secondary battery such as a lithium ion secondary battery has such a structure that an electrode body including a positive electrode plate and a negative electrode plate is housed together with an electrolytic solution in a battery case.

Patent Document 1 discloses a rectangular secondary battery configured such that a wound electrode body is housed in a rectangular battery case. Ends (electrode foil) of positive and negative electrode plates protruding from both end portions of the electrode body in a winding axis direction are each connected to external terminals fixed to a sealing plate through current collectors. The sealing plate is provided with a gas discharge valve, and when a gas pressure exceeds a predetermined value, the gas discharge valve is ruptured to release gas generated in the battery to the outside of the battery.

### CITATION LIST

### PATENT DOCUMENT

PATENT DOCUMENT 1: Japanese Unexamined Patent Publication No. 2013-54821

JP 2007 179793 A relates to a sealed battery lid having a thin wall portion and an insulating sealing member for fixing an electrode terminal by insert molding, which prevents cleavage of the thin wall portion during manufacturing.

US 9 548 481 B2 relates to a battery module with a cap assembly structure having a good process stability when manufacturing the battery module.

### SUMMARY OF THE INVENTION

A joint method by ultrasonic welding has been known as the method for joining the ends of the positive and negative electrode plates and the current collectors. Ultrasonic welding is performed in such a manner that vibration energy of ultrasonic waves is applied to joint surfaces while the end of the positive or negative electrode plate and the current collector are sandwiched by a hom and an anvil.

It is necessary to reduce a battery intemal resistance in a high-power battery in order to obtain sufficient output characteristics. For this reason, the resistance also needs to be reduced for the current collectors forming current paths from the positive and negative electrode plates to the external terminals. Thus, the thickness of the current collector needs to be increased.

If the thickness of the current collector is increased, in a case where the ends of the positive and negative electrode plates and the current collectors are joined by ultrasonic welding, the vibration energy needs to be high. The current collector is connected to the external terminal fixed to the sealing plate. Thus, ultrasonic vibration applied to the current collector propagates to the gas discharge valve provided at the sealing plate by way of the external terminal and the sealing plate. As a result, there is a probability that when the vibration energy upon ultrasonic welding has increased, the gas discharge valve is ruptured by the ultrasonic vibration having propagated to the gas discharge valve by way of the current collector.

The invention is as set out in the independent claims, further aspects of the invention are outlined in the dependent claims. Embodiments that do not fall within the scope of the claims do not describe part of the invention.

A rectangular secondary battery according to the present invention includes an electrode body including a positive electrode plate and a negative electrode plate, a rectangular battery case having an opening and housing the electrode body, a sealing plate sealing the opening, a current collector extending on an end side of the sealing plate in a longitudinal direction thereof and joined, by ultrasonic welding, to an end of the positive electrode plate or the negative electrode plate, and an external terminal provided outside the sealing plate and connected to the current collector. The sealing plate has a gas discharge valve ruptured when the internal gas pressure of the battery case has reached a predetermined value or greater, and a thin portion formed between the external terminal and the gas discharge valve and formed thicker than the gas discharge valve, wherein when the smallest distance between any two points of the gas discharge valve and the external terminal is H and the distance between the gas discharge valve and the thin portion is h, h/H ≥ 0.2 is satisfied.

The method for manufacturing a rectangular secondary battery according to the present invention is the method for manufacturing a rectangular secondary battery configured such that an electrode body including a positive electrode plate and a negative electrode plate is housed in a rectangular battery case. The method includes a step of attaching an external terminal and a current collector connected to the external terminal to a sealing plate for sealing an opening of the battery case, a step of joining, by ultrasonic welding, the current collector extending on an end side of the sealing plate in a longitudinal direction thereof to an end of the positive electrode plate or the negative electrode plate, and a step of housing the electrode body in the battery case and sealing the opening of the battery case with the sealing plate. The sealing plate has a gas discharge valve ruptured when an intemal gas pressure of the battery case has reached a predetermined value or greater, and a thin portion formed between the external terminal and the gas discharge valve and formed thicker than the gas discharge valve, wherein when the smallest distance between any two points of the gas discharge valve and the external terminal is H and the distance between the gas discharge valve and the thin portion is h, h/H ≥ 0.2 is satisfied.

According to the present invention, the rectangular secondary battery configured so that vibration propagating to the gas discharge valve by way of the current collectors can be absorbed when the ends of the positive and negative electrode plates and the current collectors are joined by ultrasonic welding.

### BRIEF DESCRIPTION OF THE DRAWINGS

[FIG. 1] FIG. 1 is views schematically showing a configuration of a rectangular secondary battery in one embodiment of the present disclosure, FIG. 1(a) is a plan view, FIG. 1(b) is a sectional view along an Ib-Ib line of FIG. 1(a), and FIG. 1(c) is a sectional view along an Ic-Ic line of FIG. 1(b).
[FIG. 2] FIG. 2 is views showing results, which are obtained by simulation, of analysis of the amount of deformation of a sealing plate when ultrasonic vibration propagates in the sealing plate.
[FIG. 3] FIG. 3 is views showing results, which are obtained by simulation, of analysis of the amount of deformation of the sealing plate when the ultrasonic vibration propagates in the sealing plate.
[FIG. 4] FIG. 4 is a graph showing a relationship between displacement of the sealing plate in a thickness direction thereof and a distance from a center portion of the sealing plate when the ultrasonic vibration is applied to a negative electrode current collector.
[FIG. 5] FIG. 5 is views showing a configuration of a thin portion, FIG. 5(a) is a plan view, and FIG. 5(b) is a sectional view along a Vb-Vb line of FIG. 5(a).
[FIG. 6] FIG. 6 is a plan view showing the configuration of the thin portion.
[FIG. 7] FIG. 7 is a view and a graph showing results, which are obtained by simulation, of a change in the maximum stress value on the gas discharge valve when the position of the thin portion provided between the external terminal and the gas discharge valve has changed.
[FIG. 8] FIG. 8 is views for describing the method for manufacturing the rectangular secondary battery according to the present embodiment.

### DESCRIPTION OF EMBODIMENTS

Hereinafter, an embodiment of the present disclosure will be described in detail with reference to the drawings. Note that the present invention is not limited to the embodiment below. Moreover, changes can be made as necessary without departing from a scope in which advantageous effects of the present disclosure are produced.

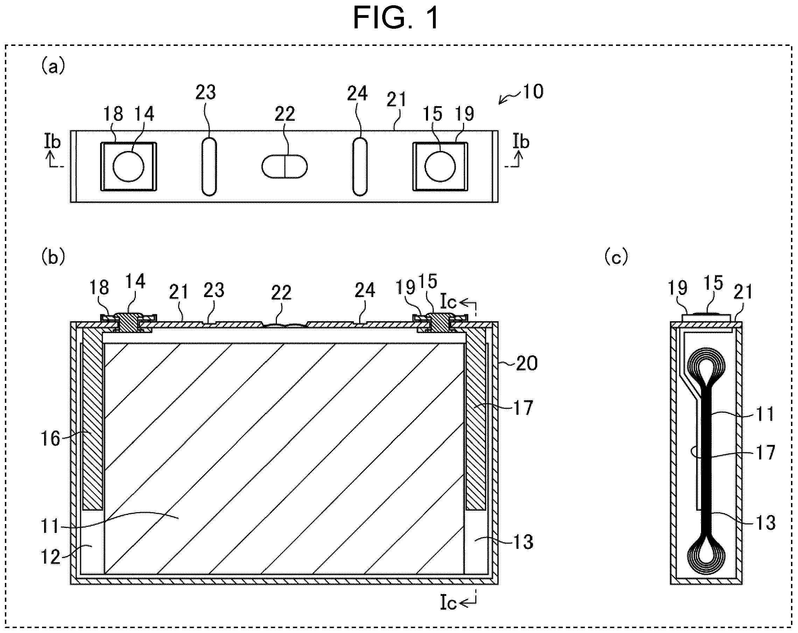

FIG. 1 is views schematically showing a configuration of a rectangular secondary battery in one embodiment of the present disclosure, FIG. 1(a) is a plan view, FIG. 1(b) is a sectional view along an Ib-Ib line of FIG. 1(a), and FIG. 1(c) is a sectional view along an Ic-Ic line of FIG. 1(b).

As shown in FIGS. 1(a) to 1(c), a rectangular secondary battery 10 in the present embodiment is configured such that an electrode body 11 as a power generation element is housed together with an electrolytic solution in a rectangular battery case 20. An opening of the battery case 20 is sealed with a sealing plate 21.

The electrode body 11 has such a structure that a positive electrode plate and a negative electrode plate are stacked or wound with a separator interposed therebetween. The positive electrode plate is configured such that a positive electrode active material layer is provided on surfaces of a positive electrode core. The negative electrode plate is configured such that a negative electrode active material layer is provided on surfaces of a negative electrode core.

Each of the positive and negative electrode plates has, at end portions in a longitudinal direction of the sealing plate 21, ends 12, 13 formed with no active material layer. The ends 12, 13 of the positive and negative electrode plates are, in a bundled state, joined to positive and negative electrode current collectors 16, 17 by ultrasonic welding.

The materials of the positive and negative electrode current collectors 16, 17 are not particularly limited, but are preferably the same materials as those of the positive and negative electrode cores. With this configuration, the ends 12, 13 of the positive and negative electrode plates and the current collectors 16, 17 can be easily welded by ultrasonic welding. For example, in the case of a lithium ion secondary battery, the positive electrode current collector 16 is preferably made of aluminum or aluminum alloy, and the negative electrode current collector 17 is preferably made of copper or copper alloy.

The positive and negative electrode current collectors 16, 17 are each connected to positive and negative electrode external terminals 14, 15 provided outside the sealing plate 21. The external terminals 14, 15 are each insulated from the sealing plate 21 by insulating members 18, 19.

The sealing plate 21 is provided with a gas discharge valve 22. The gas discharge valve 22 is ruptured when the internal gas pressure of the battery case 20 has increased to a predetermined value or greater, thereby releasing gas from the battery. The gas discharge valve 22 includes a thin portion thinner than other portions of the sealing plate 21.

In the present embodiment, the sealing plate 21 has a thin portion 23, 24 formed between each of the positive and negative electrode external terminals 14, 15 and the gas discharge valve 22 and formed thicker than the gas discharge valve 22. The thickness of the thin portion 23, 24 is set to such a size that the thin portion 23, 24 is not ruptured in advance of the gas discharge valve 22 when the internal gas pressure of the battery case 20 has increased to the predetermined value or greater.

As described above, it is necessary to reduce a battery internal resistance in a high-power battery in order to obtain sufficient output characteristics. For this reason, the current collectors 16, 17 forming current paths from the positive and negative electrode plates to the external terminals 14, 15 also need to be increased in thickness in order to reduce the resistance. As a result, as the thicknesses of the current collector 16, 17 increase, vibration energy when the ends 12, 13 of the positive and negative electrode plates and the current collectors 16, 17 are welded by ultrasonic welding increases.

Meanwhile, when the ends 12, 13 of the positive and negative electrode plates and the current collectors 16, 17 are welded by ultrasonic welding, ultrasonic vibration applied to the current collectors 16, 17 propagates to the gas discharge valve 22 provided at the sealing plate 21 by way of the external terminals 14, 15 and the sealing plate 21. As a result, there is a probability that when the vibration energy upon ultrasonic welding has increased, the gas discharge valve 22 is ruptured due to the ultrasonic vibration having propagated to the gas discharge valve 22 by way of the current collectors 16, 17.

In the present embodiment, the thin portion 23, 24 is provided between the external terminal 14, 15 and the gas discharge valve 22, and therefore, the ultrasonic vibration propagating from the external terminal 14, 15 to the gas discharge valve 22 by way of the sealing plate 21 is absorbed by the thin portion 23, 24.

The ultrasonic vibration having propagated to the external terminals 14, 15 from the current collectors 16, 17 propagates to the gas discharge valve 22 by way of the sealing plate 21. Since the thin portions 23, 24 provided at the sealing plate 21 are thinner than other portions of the sealing plate 21, the thin portions 23, 24 have a lower flexural rigidity than those of other portions of the sealing plate 21. A transverse wave of the ultrasonic vibration is a torsional wave, and therefore, the ultrasonic vibration is attenuated at a portion with a low flexural rigidity, i.e., the thin portions 23, 24, in the course of propagating in the sealing plate 21. As a result, the attenuated ultrasonic vibration propagates to the gas discharge valve 22, and therefore, excessive stress due to the ultrasonic vibration is not applied to the gas discharge valve 22. As a result, rupture of the gas discharge valve 22 due to the ultrasonic vibration having propagated to the gas discharge valve 22 by way of the current collectors 16, 17 can be prevented.

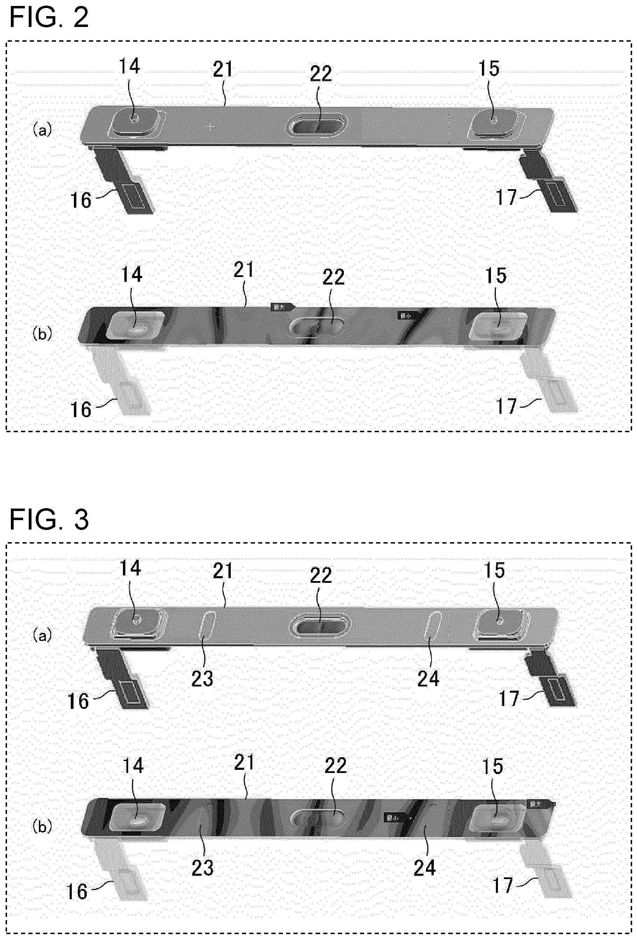

FIGS. 2 and 3 are views showing analysis results, which are obtained by simulation, of the amount of deformation of the sealing plate 21 when the ultrasonic vibration propagates in the sealing plate 21.

FIG. 2(a) is a view in a case where no thin portion is provided at the sealing plate 21, and FIG. 2(b) two-dimensionally shows, by the shade of color, displacement of the sealing plate 21 in a thickness direction thereof when the ultrasonic vibration is applied to the negative electrode current collector 17.

FIG. 3(a) is a view in a case where the thin portions 23, 24 are provided at the sealing plate 21, and FIG. 3(b) two-dimensionally shows, by the shade of color, the displacement of the sealing plate 21 in the thickness direction thereof when the ultrasonic vibration is applied to the negative electrode current collector 17. Note that the thin portion 23, 24 was arranged substantially in the middle between the gas discharge valve 22 and the external terminal 14, 15.

The simulation was conducted using a direct frequency response analysis by means of an analysis model of a fine element method solver (ANSYS). The sealing plate 21 was made of aluminum (A1050) so as to have a thickness of 1.4 mm, a width of 11.7 mm, and a length of 119 mm.

The thin portion 24 was formed in an oval shape so as to have a thickness of 0.1 mm, a width of 5.58 mm, and a length of 9 mm. The frequency of the ultrasonic vibration applied to the negative electrode current collector 17 was 20 kHz, and the amplitude of the ultrasonic vibration was 0.03 mm.

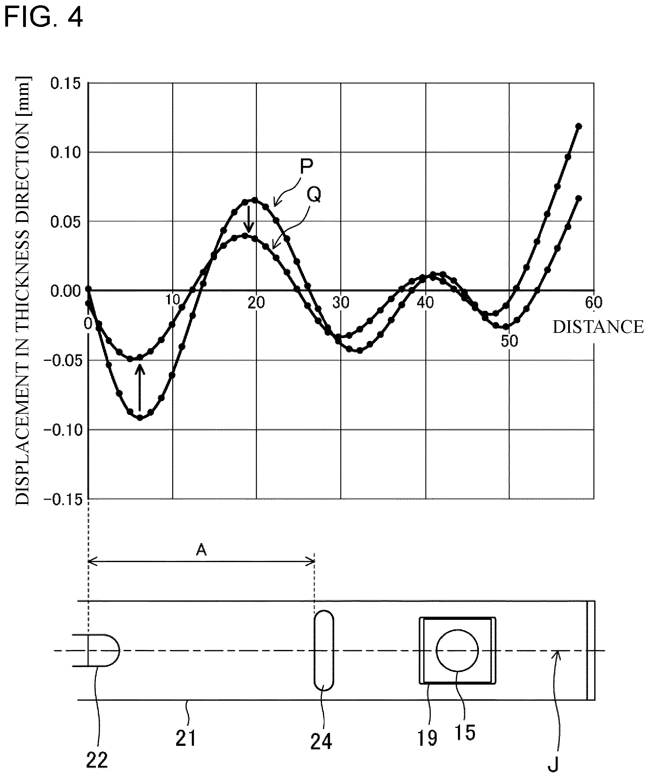

FIG. 4 is a graph showing a relationship between the displacement of the sealing plate 21 in the thickness direction thereof and a distance from a center portion of the sealing plate 21 when the ultrasonic vibration is applied to the negative electrode current collector 17. The displacement in the thickness direction as described herein indicates displacement along the center axis J of the sealing plate 21.

In FIG. 4, a curved line indicated by an arrow P shows a graph in a case where the thin portion 24 is not provided, and a curved line indicated by an arrow Q shows a graph in a case where the thin portion 24 is provided.

FIG. 4 shows that the displacement of the sealing plate 21 in the thickness direction thereof greatly decreases in a region A between the center portion of the sealing plate 21 and the thin portion 24 in the case (the curved line Q) of providing the thin portion 24 than in the case (the curved line P) of not providing the thin portion 24. That is, it shows that the thin portion 24 is provided at the sealing plate 21 so that the ultrasonic vibration propagating from the external terminal 15 to the gas discharge valve 22 by way of the sealing plate 21 can be absorbed by the thin portion 24.

In the present embodiment, an effect of absorbing the ultrasonic vibration by the thin portions 23, 24 depends on the degree of decline in the flexural rigidity of the sealing plate 21. Thus, in order to obtain a sufficient absorption effect, at least t ≤ 0.8T is preferable and t ≤ 0.5T is more preferable when the thickness of the sealing plate 21 is T and the thickness of the thin portion 23, 24 is t.

If the thickness of the thin portion 23, 24 is too small, the sealing plate 21 is distorted at the thin portion 23, 24 when the internal gas pressure of the battery has increased. As a result, there is a probability that the battery case 20 is deformed. For this reason, the thickness t of the thin portion 23, 24 is preferably 0.2T ≤ t. Note that the thickness of the gas discharge valve 22 is normally set to equal to or less than 1/10 of the thickness of the sealing plate 21, and therefore, if the thickness t of the thin portion 23, 24 is set to 0.2T, the thin portion 23, 24 is not ruptured in advance of the gas discharge valve 22.

Note that in a case where the thickness of the thin portion 23, 24 is not uniform, the thickness of a thinnest portion is defined as the thickness of the thin portion 23, 24. In a case where the thickness of the gas discharge valve 22 is not uniform, the thickness of a thinnest portion is defined as the thickness of the gas discharge valve 22.

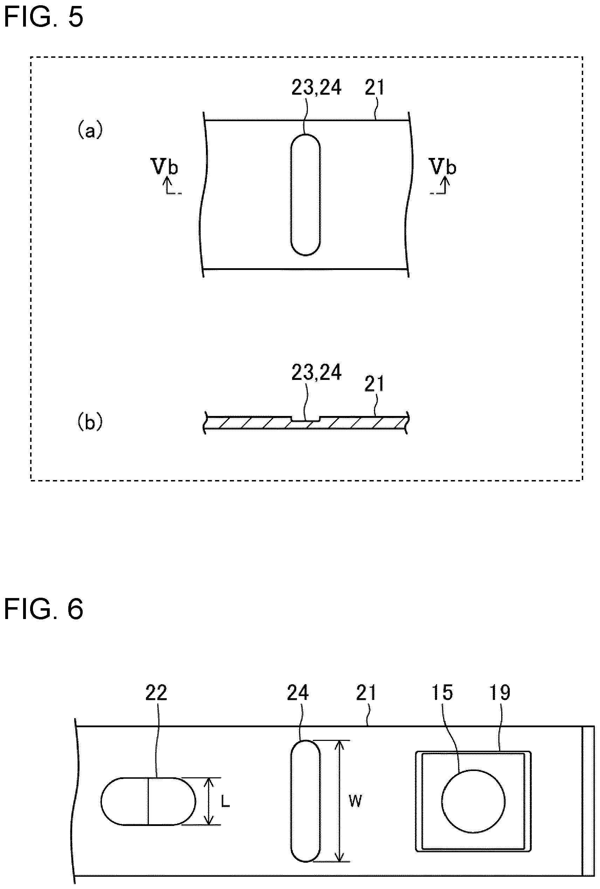

In the present embodiment, the shape of the thin portion 23, 24 is not particularly limited. FIG. 5 is views showing one example of the thin portion 23, 24, FIG. 5(a) is a plan view, and FIG. 5(b) is a sectional view along a Vb-Vb line of FIG. 5(a). The thin portion 23, **24 is an** oval extending in a width direction of the sealing plate 21. The thin portion 23, 24 in such a shape can be formed by pressing, for example. The thin portion 23, 24 may be divided in the width direction of the sealing plate 21. Alternatively, multiple thin portions 23, 24 may be provided between the external terminal 14, 15 and the gas discharge valve 22.

As shown in FIG. 6, the length W of the thin portion 24 (only the negative electrode side thin portion is shown) in the width direction of the sealing plate 21 is preferably longer than the length L of the gas discharge valve 22 in the width direction of the sealing plate 21. The thin portion 24 wider than the gas discharge valve 22 is provided before the gas discharge valve 22, and therefore, functions as a bulwark against the ultrasonic vibration propagating to the gas discharge valve 22. Thus, the ultrasonic vibration propagating to the gas discharge valve 22 can be more effectively attenuated.

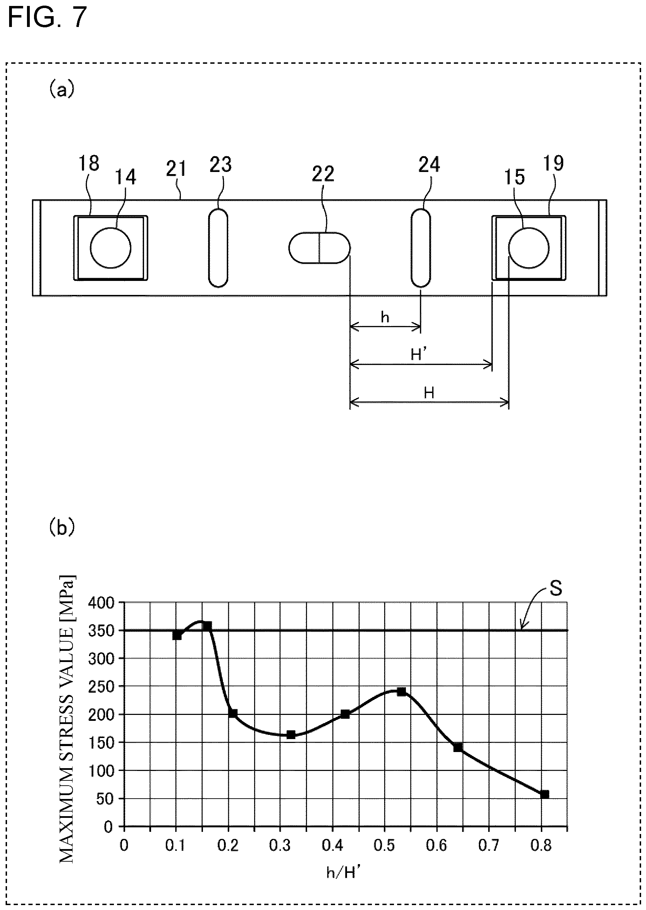

FIG. 7 is a view and a graph showing results, which are obtained by simulation, of a change in the maximum stress value on the gas discharge valve 22 when the position of the thin portion 23, 24 provided between the external terminal 14, 15 and the gas discharge valve 22 has changed.

FIG. 7(a) is a view showing the arrangement position of the thin portion 24 when a distance between an end portion of the gas discharge valve 22 and an end portion of the insulating member 19 is H' and a distance between the end portion of the gas discharge valve 22 and the thin portion 24 is h. In this case, the thin portion 24 is arranged between the end portion of the gas discharge valve 22 and the end portion of the insulating member 19.

FIG. 7(b) is a graph showing a change in the maximum stress value on the gas discharge valve 22 when h/H' has changed. Note that simulation conditions were the same as those shown in FIGS. 2 and 3. Moreover, a line indicated by an arrow S indicates the maximum stress value in a case where the thin portion 24 is not provided.

FIG. 7(b) shows that within a range in which h/H ≥ 0.2 is satisfied, the maximum stress value on the gas discharge valve 22 decreases as compared to the maximum stress value in the case of not providing the thin portion 24.

On the other hand, if the position of the thin portion 24 is too close to the gas discharge valve 22 (h/H < 0.2), the gas discharge valve 22 originally having a low flexural rigidity and the thin portion 24 purposefully provided as a portion having a low flexural rigidity become similar to each other as a portion having a low flexural rigidity, and for this reason, an effect produced by the thin portion 24 is reduced.

If the position of the thin portion 24 is too close to the insulating member 19 (h/H' > 0.8), it is difficult to form the thin portion 24 at the sealing plate 21 by, e.g., pressing.

Thus, when the distance between the gas discharge valve 22 and the insulating member 18, 19 is H' and the distance between the gas discharge valve 22 and the thin portion 23, 24 is h, the thin portion 23, 24 is preferably arranged at a position satisfying h/H' ≥ 0.2. Considering formability of the thin portion 23, 24, h/H' ≤ 0.8 is preferably satisfied.

Note that the above-described simulation was conducted taking the distance between the end portion of the gas discharge valve 22 and the end portion of the insulating member 19 as H', but results similar to those of FIG. 7(b) were obtained taking a distance between the end portion of the gas discharge valve 22 and an end portion of the external terminal 15 as H as shown in FIG. 7(a).

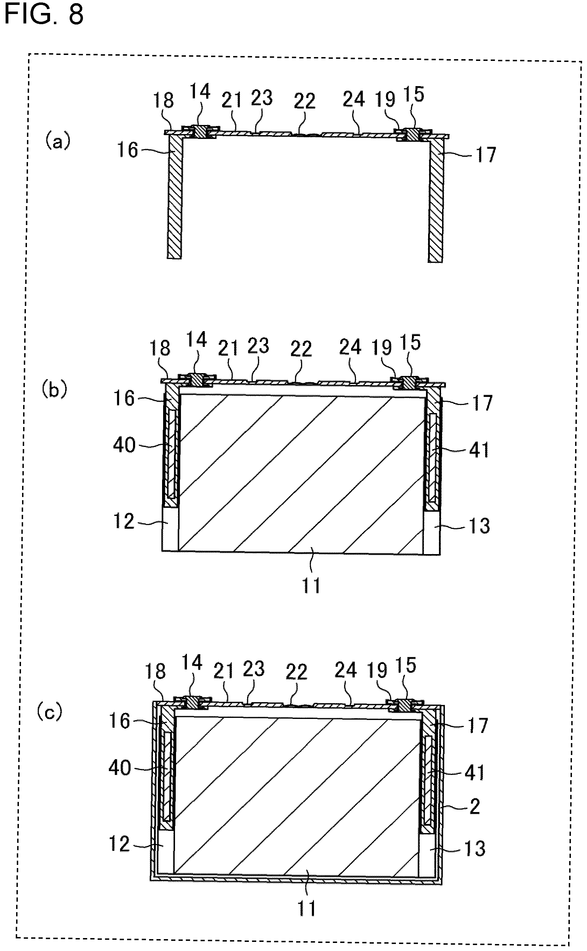

Next, the method for manufacturing the rectangular secondary battery according to the present embodiment will be described with reference to FIG. 8.

First, as shown in FIG. 8(a), the external terminals 14, 15 and the current collectors 16, 17 connected to the external terminals 14, 15 are attached to the sealing plate 21 for sealing the opening of the battery case 20. The sealing plate 21 is formed with the gas discharge valve 22 and the thin portions 23, 24 in advance.

Next, as shown in FIG. 8(b), the electrode body 11 is arranged such a position that the ends 12, 13 of the positive and negative electrode plates overlap with the current collectors 16, 17, and the ends 12, 13 of the positive and negative electrode plates and the current collectors 16, 17 are ultrasonic-welded at welding portions 40, 41 by a normal method. At this point, since the sealing plate 21 is provided with the thin portions 23, 24, the ultrasonic vibration propagating from the current collectors 16, 17 to the gas discharge valve 22 by way of the external terminals 14, 15 and the sealing plate 21 is absorbed by the thin portions 23, 24. As a result, rupture of the gas discharge valve 22 when the ends 12, 13 of the positive and negative electrode plates and the current collectors 16, 17 are welded by ultrasonic welding can be prevented.

Finally, as shown in FIG. 8(c), the electrode body 11 attached to the sealing plate 21 is housed in the rectangular battery case 20, and thereafter, the sealing plate 21 is welded to an opening edge of the battery case 20. In this manner, the rectangular secondary battery is completed.

The present disclosure has been described above with reference to the preferable embodiment, but such description is not limitative and various modifications can be made, needless to say.

The type of rectangular secondary battery in the present embodiment is not particularly limited, and for example, is applicable to a lithium ion secondary battery, a nickel-hydrogen secondary battery, etc.

### DESCRIPTION OF REFERENCE CHARACTERS

- 10: Rectangular Secondary Battery
- 11: Electrode Body
- 12: Sealing Plate
- 12, 13: Ends of Positive and Negative Electrode Plates
- 14, 15: External Terminal
- 16, 17: Current Collector
- 18, 19: Insulating Member
- 20: Battery Case
- 21: Sealing Plate
- 22: Gas Discharge Valve
- 23, 24: Thin Portion

## Claims

1. A rectangular secondary battery (10) comprising:
an electrode body (11) including a positive electrode plate (12) and a negative electrode plate (13);
a rectangular battery case (20) having an opening and housing the electrode body (11);
a sealing plate (21) sealing the opening;
a current collector (16, 17) extending on an end side of the sealing plate (21) in a longitudinal direction thereof and joined, by ultrasonic welding, to an end of the positive electrode plate (12) or the negative electrode plate (13); and
an external terminal (14, 15) provided outside the sealing plate (21) and connected to the current collector (16, 17),
wherein the sealing plate (21) has
a gas discharge valve (22) ruptured when an internal gas pressure of the battery case (20) has reached a predetermined value or greater, and
a thin portion (23, 24) formed between the external terminal (14, 15) and the gas discharge valve (22) and formed thicker than the gas discharge valve (22);
wherein, when the smallest distance between any two points of the gas discharge valve (22) and the external terminal (14, 15) is H and the distance between the gas discharge valve (22) and the thin portion (23, 24) is h, h/H ≥ 0.2 is satisfied.

2. The rectangular secondary battery (10) of claim 1, wherein
when a thickness of the sealing plate (21) is T and a thickness of the thin portion (23, **24) is t,** 0.2T ≤ t ≤ 0.8T is satisfied.

3. The rectangular secondary battery (10) of claim 1, wherein
a length of the thin portion (23, 24) in a sealing plate (21) width direction is longer than a length of the gas discharge valve (22) in the sealing plate (21) width direction.

4. A method for manufacturing a rectangular secondary battery (10) configured such that an electrode body (11) including a positive electrode plate (12) and a negative electrode plate (13) is housed in a rectangular battery case (20), comprising:
a step of attaching an external terminal (14, 15) and a current collector (16, 17) connected to the external terminal (14, 15) to a sealing plate (21) for sealing an opening of the battery case (20);
a step of joining, by ultrasonic welding, the current collector (16, 17) extending on an end side of the sealing plate (21) in a longitudinal direction thereof to an end of the positive electrode plate (12) or the negative electrode plate (13); and
a step of housing the electrode body (11) in the battery case (20) and sealing the opening of the battery case (20) with the sealing plate (21),
wherein the sealing plate (21) has
a gas discharge valve (22) ruptured when an internal gas pressure of the battery case (20) has reached a predetermined value or greater, and
a thin portion (23, 24) formed between the external terminal (14, 15) and the gas discharge valve (22) and formed thicker than the gas discharge valve (22);
wherein, when the smallest distance between any two points of the gas discharge valve (22) and the external terminal (14, 15) is H and the distance between the gas discharge valve (22) and the thin portion (23, 24) is h, h/H ≥ 0.2 is satisfied.

## Patentansprüche

1. Rechteckige Sekundärbatterie (10), die Folgendes umfasst:
einen Elektrodenkörper (11), der eine positive Elektrodenplatte (12) und eine negativen Elektrodenplatte (13) beinhaltet;
ein rechteckiges Batteriegehäuse (20), das eine Öffnung aufweist und den Elektrodenkörper (11) umschließt;
eine Dichtungsplatte (21), die die Öffnung abdichtet;
einen Stromsammler (16, 17), der sich auf einer Endseite der Dichtungsplatte (21) in eine Längsrichtung davon erstreckt und mittels Ultraschallschweißung an ein Ende der positiven Elektrodenplatte (12) oder der negativen Elektrodenplatte (13) gekoppelt ist; und
einen äußeren Anschluss (14, 15), der außerhalb der Dichtungsplatte (21) bereitgestellt und mit dem Stromsammler (16, 17) verbunden ist,
wobei die Dichtungsplatte (21) Folgendes aufweist
ein Gasauslassventil (22), das durchbrochen wird, wenn ein interner Gasdruck des Batteriegehäuses (20) einen vorbestimmten Wert oder mehr erreicht hat, und
einen dünnen Abschnitt (23, 24), der zwischen dem äußeren Anschluss (14, 15) und dem Gasauslassventil (22) gebildet und dicker als das Gasauslassventil (22) gebildet ist;
wobei, wenn der kleinste Abstand zwischen beliebigen zwei Punkten des Gasauslassventils (22) und dem äußeren Anschluss (14, 15) H ist und der Abstand zwischen dem Gasauslassventil (22) und dem dünnen Abschnitt (23, 24) h ist, h/H ≥ 0,2 erfüllt ist.

2. Rechteckige Sekundärbatterie (10) nach Anspruch 1, wobei
wenn eine Dicke der Dichtungsplatte (21) T ist und eine Dicke des dünnen Abschnitts (23, 24) t ist, 0,2T ≤ t ≤ 0,8T erfüllt ist.

3. Rechteckige Sekundärbatterie (10) nach Anspruch 1, wobei
eine Länge des dünnen Abschnitts (23, 24) in einer Breitenrichtung der Dichtungsplatte (21) länger ist als eine Länge des Gasauslassventils (22) in der Breitenrichtung der Dichtungsplatte (21).

4. Verfahren zum Herstellen einer rechteckigen Sekundärbatterie (10), die derart ausgelegt ist, dass ein Elektrodenkörper (11), der eine positive Elektrodenplatte (12) und eine negative Elektrodenplatte (13) beinhaltet, in einem rechteckigen Batteriegehäuse (20) umschlossen ist, das Folgendes umfasst:
einen Schritt des Befestigens eines äußeren Anschlusses (14, 15) und eines Stromsammlers (16, 17), der mit dem äußeren Anschluss (14, 15) verbunden ist, an einer Dichtungsplatte (21) zum Abdichten einer Öffnung des Batteriegehäuses (20);
einen Schritt des Koppelns des Stromsammlers (16, 17), der sich auf einer Endseite der Dichtungsplatte (21) in eine Längsrichtung davon erstreckt, mittels Ultraschallschweißung an ein Ende der positiven Elektrodenplatte (12) oder der negativen Elektrodenplatte (13); und
einen Schritt des Umschließens des Elektrodenkörpers (11) im Batteriegehäuse (20) und des Abdichtens der Öffnung des Batteriegehäuses (20) mit der Dichtungsplatte (21),
wobei die Dichtungsplatte (21) Folgendes aufweist
ein Gasauslassventil (22), das durchbrochen wird, wenn ein interner Gasdruck des Batteriegehäuses (20) einen vorbestimmten Wert oder mehr erreicht hat, und
einen dünnen Abschnitt (23, 24), der zwischen dem äußeren Anschluss (14, 15) und dem Gasauslassventil (22) gebildet und dicker als das Gasauslassventil (22) gebildet ist;
wobei, wenn der kleinste Abstand zwischen beliebigen zwei Punkten des Gasauslassventils (22) und dem äußeren Anschluss (14, 15) H ist und der Abstand zwischen dem Gasauslassventil (22) und dem dünnen Abschnitt (23, 24) h ist, h/H ≥ 0,2 erfüllt ist.

## Revendications

1. Batterie secondaire rectangulaire (10) comprenant :
un corps d'électrode (11) comportant une plaque d'électrode positive (12) et une plaque d'électrode négative (13) ;
un boîtier de batterie (20) rectangulaire ayant une ouverture et logeant le corps d'électrode (11) ;
une plaque d'étanchéité (21) scellant l'ouverture ;
un collecteur de courant (16, 17) s'étendant sur un côté d'extrémité de la plaque d'étanchéité (21) dans le sens longitudinal de celle-ci, et relié par soudage aux ultrasons à une extrémité de la plaque d'électrode positive (12) de la plaque d'électrode négative (13) ; et
une borne externe (14, 15) prévue à l'extérieur de la plaque d'étanchéité (21) et connectée au collecteur de courant (16, 17),
dans laquelle la plaque d'étanchéité (21) a
une soupape de décharge de gaz (22) qui se rompt lorsqu'une pression de gaz interne du boîtier de batterie (20) a atteint une valeur prédéterminée ou supérieure, et
une partie mince (23, 24) formée entre la borne externe (14, 15) et la soupape de décharge de gaz (22) et formée plus épaisse que la soupape de décharge de gaz (22) ;
dans laquelle, lorsque la plus petite distance entre deux points quelconques de la soupape de décharge de gaz (22) et la borne externe (14, 15) est H et que la distance entre la soupape de décharge de gaz (22) et la partie mince (23, 24) est h, h/H ≥ 0,2 est satisfaite.

2. Batterie secondaire rectangulaire (10) selon la revendication 1, dans laquelle
lorsqu'une épaisseur de la plaque d'étanchéité (21) est T et qu'une épaisseur de la partie mince (23, 24) est t, 0,2T ≤ t ≤ 0,8T est satisfaite.

3. Batterie secondaire rectangulaire (10) selon la revendication 1, dans laquelle
une longueur de la partie mince (23, 24) dans le sens de la largeur de la plaque d'étanchéité (21) est supérieure à la longueur de la soupape de décharge de gaz (22) dans le sens de la largeur de la plaque d'étanchéité (21).

4. Procédé de fabrication d'une batterie secondaire rectangulaire (10) configurée de sorte qu'un corps d'électrode (11) comportant une plaque d'électrode positive (12) et une plaque d'électrode négative (13) soit logé dans un boîtier de batterie (20) rectangulaire, comprenant :
une étape de fixation d'une borne externe (14, 15) et d'un collecteur de courant (16, 17) connecté à la borne externe (14, 15) à une plaque d'étanchéité (21) pour sceller une ouverture du boîtier de batterie (20) ;
une étape d'assemblage par soudage aux ultrasons du collecteur de courant (16, 17) s'étendant sur un côté d'extrémité de la plaque d'étanchéité (21) dans le sens longitudinal de celle-ci à une extrémité de la plaque d'électrode positive (12) de la plaque d'électrode négative (13) ; et
une étape de logement du corps d'électrode (11) dans le boîtier de batterie (20) et de scellement de l'ouverture du boîtier de batterie (20) à l'aide de la plaque d'étanchéité (21),
dans lequel la plaque d'étanchéité (21) a une soupape de décharge de gaz (22) qui se rompt lorsqu'une pression de gaz interne du boîtier de batterie (20) a atteint une valeur prédéterminée ou supérieure, et
une partie mince (23, 24) formée entre la borne externe (14, 15) et la soupape de décharge de gaz (22) et formée de manière à être plus épaisse que la soupape de décharge de gaz (22) ;
dans lequel, lorsque la plus petite distance entre deux points quelconques de la soupape de décharge de gaz (22) et la borne externe (14, 15) est H et que la distance entre la soupape de décharge de gaz (22) et la partie mince (23, 24) est h, h/H ≥ 0,2 est satisfaite.
